# EUROPEAN PATENT SPECIFICATION

(11) **EP 3 937 740 B1**
(45) Date of publication and mention of the grant of the patent: **08.03.2023**
(21) Application number: 20710413.4
(22) Date of filing: 18.02.2020
(51) Int. Cl.: A47J 31/52

(54) **COFFEE MACHINE WITH A TEMPERATURE ADJUSTMENT AND CONTROL MODULE**
KAFFEEMASCHINE MIT EINEM MODUL ZUR TEMPERATURREGELUNG UND -STEUERUNG
MACHINE À CAFÉ DOTÉE D'UN MODULE DE RÉGLAGE ET DE COMMANDE DE TEMPÉRATURE

(30) Priority: 11.03.2019 BG 427219
(43) Date of publication of application: 19.01.2022
(73) Proprietor: Mojer Ltd, 3700 Vidin (BG)
(72) Inventor: STOYANOVA, Milena, Petrova, 1421 Sofia (BG); MILETIEV, Rossen, Georgiev, 1700 Sofia (BG)
(74) Representative: Ilarionov, Pavko Jordanov
(86) International application number: PCT/BG2020/000005
(87) International publication number: WO 2020/181341

(56) References cited:
- US-A1- 2014 272 025
- US-A1- 2016 296 065
- US-A1- 2017 049 259
- US-A1- 2019 053 656

## Description

### Field of the invention

The invention relates to a coffee machine with a temperature adjustment and control module, in particular for coffee machines intended for espresso. The invention will find application in the food industry and the households.

### Background of the Invention

It is known in the prior art an espresso coffee machine with a water flow control of the thermosyphon cycle. The coffee machine consists of a pump that is connected to a boiler with heating elements. The boiler is equipped with a heat exchanger which, through a pipeline, is connected to the coffee group of the machine. The coffee group outlet is positioned above the filter handle. The pipeline, upstream the coffee group of the machine, is equipped with a device for regulating of the water flow. The coffee group of the machine is provided with pipelines and valves, through which the group is connected to an additional outlet and a return pipeline to the heat exchanger.

The water flow regulating device is a valve, operating only in two extreme positions - fully opened and fully closed, which creates a number of inconveniences when operating the machine. (EP1074210A1)

Another disadvantage of the known coffee machine is the lack of a temperature sensor in the heat exchanger to measure the temperature of the heated water, which leads to insufficient precision in the regulation and increased electricity consumption.

Document US2016/296065 describes a coffee machine according to the preamble of claim 1.

### Summary of the Invention

The task of the invention is to create a coffee machine with a temperature adjustment and control module, that allows reducing energy losses and water consumption during the operation of the coffee machine, which can be adjusted to predefined criteria for a quality beverage, set by the customer.

The proposed coffee machine with a temperature adjustment and control module consists of a pump, connected to a boiler with heating elements, whereby in the boiler is installed a heat exchanger, connected to a coffee group. There is a handle with a filter under the coffee group. A device for regulating the water flow is mounted on the pipeline, connecting the heat exchanger and the coffee group, whereby said device is also connected via a return pipeline to the heat exchanger.

According to the invention, a volumetric sensor for the coffee machine is installed on the supply line of the pump, while a volumetric sensor for the coffee group and a valve for filling the boiler, are fitted on the pipeline, connecting the pump to the heat exchanger.

A device for regulating the water flow, being an adjustable valve, is fitted to the pipeline, connecting the heat exchanger to the coffee group.

The coffee group of the machine is also connected to the heat exchanger via an electromagnetic valve.

A permanent magnet is attached to the handle with the filter, as well as an identification sensor and a temperature sensor are fitted to the coffee group.

The coffee machine also includes a temperature adjustment and control module, connected to a server, the temperature sensor, the identification sensor, the electromagnetic valve, the pump, the volumetric sensor for the entire coffee machine and the volumetric sensor for the coffee group. The temperature adjustment and control module is also connected to the water level and the water pressure sensors of the boiler, the adjustable valve, the boiler heating elements, the heat exchanger temperature sensor and the boiler filling valve.

A keypad and a display are also provided for the temperature adjustment and control module.

For a coffee machine with more than one coffee group, the number of the 3D magnetic sensors for identification, the number of the adjustable valves and the number of the temperature sensors in the heat exchanger are equal to the number of the coffee groups.

The number of the permanent magnets in the handles is equal to the number of coffee groups of the coffee machine.

The main advantage of the coffee machine is that, with the help of the temperature adjustment and control module, it is possible to identify the handles and their location, to read the temperature of the water in the coffee group and the heat exchanger, to read the pressure in the boiler, to regulate the water flow through the thermosyphon cycle and to control the switching on and off of the boiler heaters, thus achieving the optimum temperature of each beverage.

Another advantage is, that the handle identification is based on a digital 3D sensor, which allows accurate determination of the magnitude and direction of the magnetic field, respectively the spatial arrangement of the handle in relation to the coffee group.

An additional advantage is the use of an adjustable mixing valve, which allows for a stepless adjustment of the water flow in the pipelines of the thermosiphon cycle, as well as the control of the electromagnetic valve of the coffee group and the pump for stopping and starting the water in the absence of the handle.

### Brief description of the drawings

The invention is illustrated by the accompanying figures as follows:
**Figure 1** is a block diagram of an espresso coffee machine;
**Figure 2** - illustrates the identification of the handle's position with a 3D linear magnetic sensor based on the intensity and direction of the magnetic field in the following cases:
   a) the handle is absent;
   (b) with a handle situated closely but not fitted;
   c) with a single handle fitted in the coffee group;
   d) with a double handle fitted in the coffee group.

### Detailed description of the invention

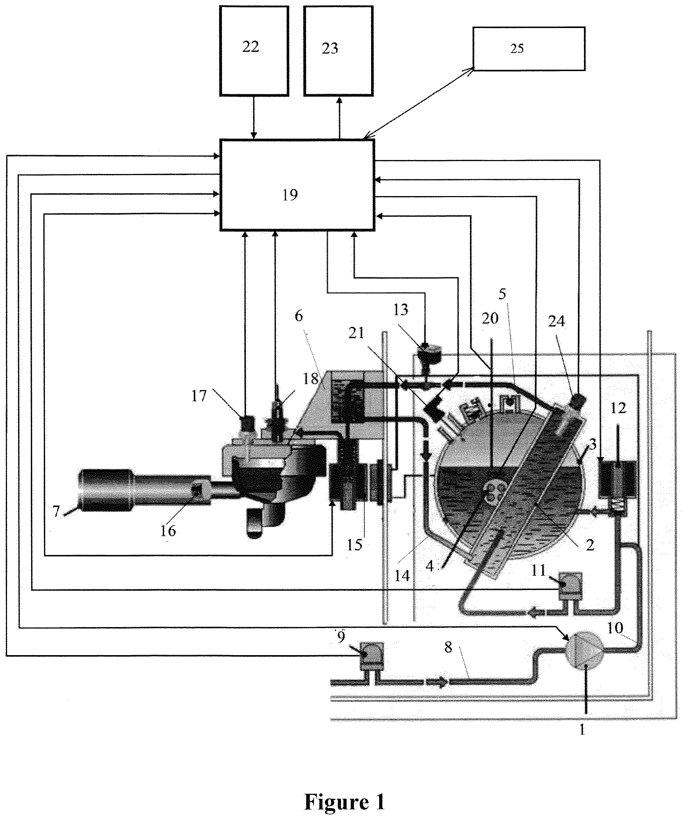

The espresso coffee machine of the present invention consists of a pump 1 which, through a heat exchanger 2, installed in a boiler 3 with heating elements 4 and a pipeline 5, is connected to the coffee group 6, the outlet opening of which is set above a handle 7 with a filter - **Fig. 1****.**

A volumetric sensor 9 for the coffee machine is installed on the pump supply line 8 upstream the pump 1, whereby a volumetric sensor 11 for the coffee group 6 and a valve 12 for filling the boiler 3 with water, are installed on a pipeline 10, connecting the pump 1 to the heat exchanger 2.

A device for regulating the water flow, being an adjustable valve 13, is installed on the pipeline 5, connecting the heat exchanger 2 to the coffee group 6, placed right in front of the coffee group 6.

The coffee group 6 is connected via a return pipeline 14 to the heat exchanger 2 and to an electromagnetic valve 15.

An identification sensor, being a 3D linear magnetic sensor 17 and a temperature sensor 18 are installed on the coffee group 6.

A permanent magnet 16 is attached to the handle 7 of the coffee machine.

The espresso machine also includes a temperature adjustment and control module 19 that receives and/or sends signals to/from the temperature sensor 18, the 3D linear magnetic sensor 17 (the identification sensor), the electromagnetic valve 15, the pump 1, the volumetric sensor 9 for the whole coffee machine and to the volumetric sensor 11 for the coffee group 6.

The temperature adjustment and control module 19 is also connected to a water level sensor 20 and a water pressure sensor 21 in the boiler 3, to the adjustable valve 13, the heating elements 4 located in the boiler 3, to a temperature sensor 24 of the heat exchanger 2 and to the valve 12 for filling the boiler 3 with water.

A keypad 22 and a display 23 are also provided for the temperature adjustment and control module 19.

The temperature adjustment and control module 19 is also connected to a server 25 for transmitting information for the parameters of each beverage and sensor data, as well as for receiving and automatically adjusting the temperature control parameters for each coffee group (the temperature of the coffee group 6, the temperature in the heat exchanger 2, pressure in the pump 1, etc.) to achieve an optimum quality and quantity of the desired beverage. These data can also be manually set and tuned up in the temperature adjustment and control module 19.

### Mode of operation

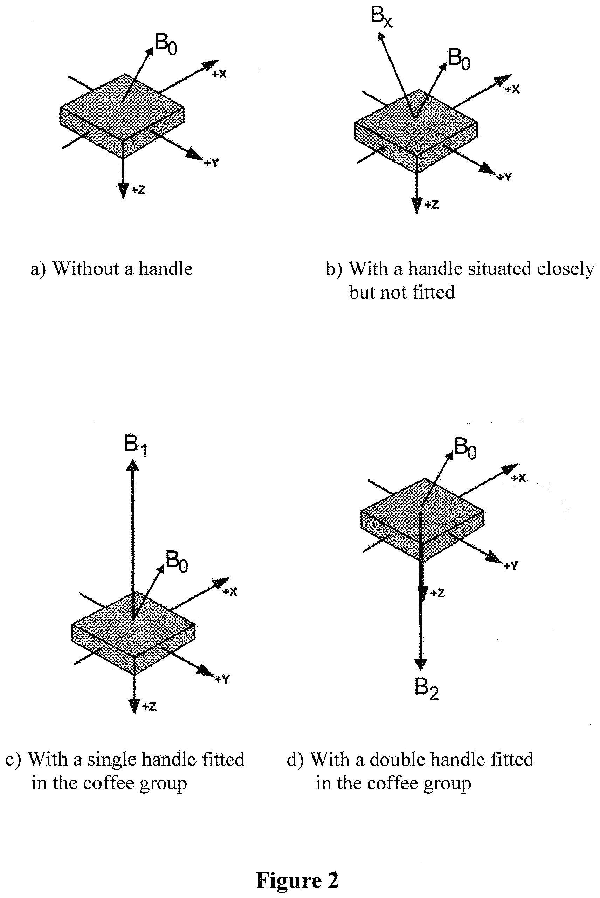

By placing the handle 7 in the coffee group 6 of the coffee machine, the permanent magnet 16 creates an additional magnetic field Bₓ, which interacts with the external magnetic field (terrestrial magnetic field) B₀ - Fig. 1. The direction, intensity and time for establishing of the resultant magnetic field B (B₁ or B₂) determine the type of the handle placed - **Fig. 2****.**

The handle 7 may be fitted with one or two coffee dispensers, respectively for one or two coffees. By reversing the direction of the magnet 16, the direction of the magnetic field changes and thus determines whether the handle is single or double.

In the case of a coffee machine with more than one coffee group 6, the number of the 3D magnetic sensors of the identification sensor 17, as well as the number of the adjustable valves 13 and the number of the temperature sensors 18 in the heat exchanger 2, is equal to the number of the coffee groups 6.

The number of the permanent magnets 16 is equal to the number of the handles 7, whereby the permanent magnets 16 are directed in opposite directions in the single and double handles

The temperature sensors 18 and 24 submit information to the temperature adjustment and control module 19 which, based on predetermined values for the temperature of these sensors, determines and sets the position of the adjustable valve 13. In this way, the water flow in the thermosiphon cycle of the coffee machine is regulated in order to achieve minimum temperature losses in the metal of the coffee group 6 and to prevent excessive increase of the water temperature in the upper part of the heat exchanger 2 - **Fig. 1****.**

When removing the handle 7 from the coffee group 6, the temperature adjustment and control module 1 switches on the electromagnetic valve 15 and the pump 1 for releasing water to clean the coffee group 6 after the beverage is made. At the same time, the temperature adjustment and control module 19 determines the time from the last brewed beverage and the temperature deviation in the metal of the coffee group 6 from a predetermined value. If this temperature exceeds certain limits, the electromagnetic valve 15 of the coffee group and the pump 1 will be switched on for a certain period of time until the temperature deviation becomes less than the specified value.

Upon completion of the beverage preparation or the cleaning process, the temperature adjustment and control unit 19 sends a signal to the display 23. The information refers to the water temperature in the coffee group 6 and the heat exchanger 2 respectively, the measured amount of water passed through the coffee group 6 from the volumetric sensor 11, the total amount of water passed through the coffee machine from the volumetric sensor 9, the time for brewing or cleaning, the pressure in the boiler 3 from the water pressure sensor 21 and the magnetic field intensity, measured by the identification sensor 17.

The decrease in the water level in the boiler 3 is read by the water level sensor 20 and when it is lowered, the valve 12 opens until the water is added up.

Based on the information for the water pressure in the boiler 3 from the water pressure sensor 21, the heating elements 4 are controlled to maintain a constant water temperature in the boiler 3.

The temperature adjustment and control module 19 monitors the temperature of the metal of the coffee group 6 and the temperature of the heat exchanger 2 through the temperature sensors 18 and 24 and, based on a Proportiona-Integral-Derivative (PID) controller, calculates the position of the adjustable valve 13, which determines the flow of the circulating water during the thermosyphon cycle and accordingly the metal temperature of the respective coffee group.

At the same time, the water temperature in the boiler 3 is determined by measuring of the water pressure in the boiler 3 by means of the water pressure sensor 21, thus indirectly controlling the temperature in the heat exchanger 2 by switching on and off the heating elements 4 which heat the water in the boiler 3 and in the heat exchanger 2.

In addition to the temperature and pressure data, the temperature adjustment and control module 19 determines the presence of a handle 7 in the coffee group by measuring the intensity and direction of the magnetic field, created by the permanent magnet 16, attached to the handle 7, as well as the time for establishing it.

A beverage can be started by pressing a key on the keypad 22, resulting in switching on of the electromagnetic valve 15 and the pump 1. After each beverage is made and the handle 7 is removed from the coffee group, the temperature adjustment and control module 19 switches on the electromagnetic valve 15 and the water pump 1, so that the water to flow through the coffee group 6, the amount of which is determined by the volumetric sensor 11 to remove the residual coffee from the coffee group 6.

When the coffee machine is not used for a certain (predetermined) time interval and if the metal temperature measured by the temperature sensor 18 still reads lower values than the preset parameters in the temperature adjustment and control module 19 , after the handle 7 is removed from the coffee group, water starts running through the coffee group. This is done by switching on the electromagnetic valve 15 and the pump 1. With the flow of water, the metal temperature of the coffee group 6 increases and the temperature in the heat exchanger 2 decreases. The module 19 monitors the two sensors 18 and 24 and when they reach the set parameters, the process is stopped and the coffee group 6 has reached the optimum operating temperature. When the water level in the boiler 3 is lowered, determined by the water level sensor 20, the electromagnetic valve 12 is activated to increase the level.

As noted above, the temperature adjustment and control module 19 is also connected to a server 25, where the beverage information is stored and from where the temperature control parameter settings can be obtained, depending on a number of other factors - the type of the coffee, the coffee machine location, customer preferences for the drink characteristics, the season and so on.

During the process, the information from the temperature sensors 18 and 24, from the water pressure sensor 21, the volume of water passed from the volumetric sensor 11 of the coffee group 6 and the volumetric sensor 9 of the coffee machine, are displayed on the display 23.

## Claims

1. A coffee machine with a temperature control device comprising a pump, connected to a boiler with heating elements, in which is fitted a heat exchanger, connected to a coffee group of the machine, under which is placed a handle with a filter, whereby between the heat exchanger and the coffee group is installed a device for regulating the water flow,
**characterized in that,**
the device for regulating the water flow is an adjustable valve (13), whereby a volumetric sensor (9) for the coffee machine is fitted to the supply pipeline (8), and between the pump (1) and the heat exchanger (2) are fitted a volumetric sensor (11) for the coffee group (6) and valve (12) for filling the boiler (3), where the coffee group (6) is connected to an electromagnetic valve (15) and the heat exchanger (2), while a permanent magnet (16) is mounted on the handle (7) and an identification sensor (17) and a temperature sensor (18) are installed on the machine group (6), whereby the coffee machine also includes a temperature adjustment and control module (19) connected to a server (25), the temperature sensor (18), the identification sensor (17), the electromagnetic valve (15), the pump (1), the volumetric sensor (9) for the whole coffee machine and the volumetric sensor (11) of the coffee group, as at the same time the temperature adjustment and control module (19) is also connected to a water level sensor (20) and a water pressure sensor (21) in the boiler (3), the adjustable valve (13), the heating elements (4) of the boiler (3), a temperature sensor (24) of the heat exchanger (2) and the valve (12) for filling the boiler (3), whereby the temperature adjustment and control module (19) is provided with a keypad (22) and a display (23) as well.

2. A coffee machine with a temperature adjustment and control module, according to claim 1, **characterized in that**, where the coffee machine is with more than one coffee group, the number of 3D magnetic sensors of the identification sensor (17), the number of the adjustable valves (13) and the number of the temperature sensors (24) in the heat exchanger (2) is equal to the number of the coffee groups (6).

3. A coffee machine with a temperature adjustment and control module, according to claims 1 and 2, **characterized in that**, the number of permanent magnets (16) in the handles (7) is equal to the number of coffee groups 6) in the coffee machine.

## Patentansprüche

1. **Kaffeemaschine mit Temperatur-Kontrolle und -Steuerung,** bestehend aus einer Pumpe, die mit einem Boiler mit Heizelementen verbunden ist, in dem ein Wärmetauscher installiert ist, der mit einer Kaffee-Einheit der Maschine verbunden ist, unter der ein Griff mit einem Filter installiert ist, indem zwischen dem Wärmetauscher und der Kaffee-Einheit, ein Gerät installiert ist, das den Wasserfluss reguliert,
**dadurch gekennzeichnet, dass**
die Vorrichtung zur Regulierung des Wasserflusses ein einstellbares Ventil (13) darstellt, indem an der Versorgungsleitung (8) der Pumpe (1) ein Volumensensor (9) für die Kaffeemaschine installiert ist, und zwischen der Pumpe (1) und dem Wärmetauscher (2) ein Volumensensor (11) der Kaffee-Einheit (6) und ein Ventil (12) zum Befüllen des Boilers (3) montiert sind, indem die Kaffee-Einheit (6) mit einem elektromagnetischen Ventil (15) und mit dem Wärmetauscher (2) verbunden ist, und am Griff (7) ist ein Permanentmagnet (16) montiert, indem an der Gruppe (6) der Maschine ein Identifikationssensor (17) und ein Temperatursensor (18) installiert sind, indem die Kaffeemaschine auch ein Modul für Kontrolle und Steuerung der Temperatur (19) umfasst, verbunden mit einem Server (25), mit dem Temperatursensor (18), mit dem Sensor zur Identifizierung (17), dem Magnetventil (15), der Pumpe (1), dem Volumensensor (9) der gesamten Kaffeemaschine, dem Volumensensor (11) der Gruppe, während gleichzeitig das Temperaturregel- und Verwaltungsmodul (19) verbunden und mit den Sensoren für das Niveau (20) und für den Druck (21) des Wassers im Boiler (3) ist, mit dem einstellbaren Ventil (13), mit den Heizelementen (4) des Boilers (3), mit dem Temperaturfühler (24) des Wärmetauschers (2) und mit dem Ventil (12) zum Befüllen des Boilers (3), und zum Temperatursteuer- und Verwaltungsmodul (19) enthält auch eine Tastatur (22) und eine Anzeige (23) vorgesehen sind.

2. **Kaffeemaschine mit Temperatur-Kontrolle und -Steuerung,** gern. Patentanspruch 1, **dadurch gekennzeichnet, dass** bei einer Kaffeemaschine mit mehr als einer Einheit, die Anzahl der 3D Magnetsensoren des Sensors zur Identifizierung (17), die Anzahl der einstellbaren Ventile (13) und die Anzahl der Temperaturfühler (24) im Wärmetauscher (2) der Anzahl der Einheiten (6) ist.

3. **Kaffeemaschine mit Temperatur-Kontrolle und -Steuerung,** gern. Patentanspruch 1, **dadurch gekennzeichnet, dass** die Anzahl der Permanentmagnete (16) in den Griffen (7) gleich der Anzahl der Einheiten (6) der Kaffeemaschine ist.

## Revendications

1. **Machine à café munie d'un dispositif de contrôle et de gestion de la température** composée d'une pompe, reliée à un chauffe-eau avec des éléments chauffants, dans lequel est installé un échangeur de chaleur relié à un groupe de café de la machine, sous lequel est installée une poignée avec un filtre, un dispositif de régulation du débit de l'eau étant installé entre l'échangeur de chaleur et le groupe de café,
**caractérisée en ce que**
le dispositif de régulation du débit de l'eau constitue une valve réglable (13), un capteur de volume (9) pour la machine à café étant monté sur la conduite d'alimentation (8) de la pompe (1), et un capteur de volume (11) pour le groupe de café (6) et une soupape (12) de remplissage du chauffe-eau (3) sont montés entre la pompe (1) et l'échangeur de chaleur (2), dans lequel le groupe de café (6) est relié à une soupape électromagnétique (15) et à l'échangeur de chaleur (2), et un aimant permanent (16) est monté sur la poignée (7), un capteur d'identification (17) et un capteur de température (18) étant montés sur le groupe (6) de machine, la machine à café comprenant également un module de contrôle et de gestion de la température (19) relié par un serveur (25), au capteur de température (18), au capteur d'identification (17), la soupape électromagnétique (15), la pompe (1), le capteur de volume (9) de toute la machine à café, le capteur de volume (11) du groupe, et en même temps le module de contrôle et de gestion de la température (19) est également relié aux capteurs de niveau (20) et de pression (21) de l'eau dans le chauffe-eau (3), à la valve réglable (13), aux éléments chauffants (4) du chauffe-eau (3), à un capteur de température (24) de l'échangeur de chaleur (2) et à la soupape (12) de remplissage du chauffe-eau (3), et un clavier (22) et un écran (23) sont également prévus au module de contrôle et de gestion de la température (19).

2. **Machine à café munie d'un dispositif de contrôle et de gestion de la température,** selon la revendication 1, **caractérisée en ce que**, dans une machine à café avec plus d'un groupe, le nombre des capteurs magnétiques 3D du capteur d'identification (17), le nombre des valves réglables (13) et le nombre de capteurs de température (24) dans l'échangeur de chaleur (2) est égal au nombre des groupes (6).

3. **Machine à café munie d'un dispositif de contrôle et de gestion de la température,** selon les revendications 1 et 2, **caractérisée en ce que**, le nombre d'aimants permanents (16) dans les poignées (7) est égal au nombre des groupes (6) de la machine à café.
